(19) Europäisches Patentamt

European Patent Office

Office européen des brevets

(11) **EP 3 136 057 B1**

(12) **EUROPÄISCHE PATENTSCHRIFT**

(45) Veröffentlichungstag und Bekanntmachung des Hinweises auf die Patenterteilung:
**17.10.2018 Patentblatt 2018/42**

(21) Anmeldenummer: **16182674.8**

(22) Anmeldetag: **04.08.2016**

(51) Int Cl.:
*G01D 5/244* ^(2006.01)    *G01D 5/347* ^(2006.01)

(54) **OPTISCHE POSITIONSMESSEINRICHTUNG**

OPTICAL POSITION SENSOR SYSTEM

SYSTÈME OPTIQUE DE MESURE DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.08.2015 DE 102015216268**

(43) Veröffentlichungstag der Anmeldung:
**01.03.2017 Patentblatt 2017/09**

(73) Patentinhaber: **Dr. Johannes Heidenhain GmbH 83301 Traunreut (DE)**

(72) Erfinder:
• **HOLZAPFEL, Wolfgang**
  **83119 Obing (DE)**
• **LINGK, Christoph, Dr.**
  **83278 Traunstein (DE)**
• **TRAUTNER, Dr. Johannes**
  **verstorben (DE)**

(56) Entgegenhaltungen:
**EP-A1- 1 043 571      EP-A2- 1 014 034**
**US-A1- 2007 187 583      US-A1- 2012 085 897**

**Beschreibung**

**GEBIET DER TECHNIK**

Die vorliegende Erfindung betrifft eine optische Positionsmesseinrichtung gemäß dem Oberbegriff von Anspruch 1. Diese ist zur hochgenauen absoluten Positionsbestimmung geeignet.

**STAND DER TECHNIK**

Eine gattungsgemäße absolute optische Positionsmesseinrichtung ist z.B. aus der US 5,235,181 bekannt. Diese umfasst eine Maßverkörperung, die sich entlang einer Messrichtung erstreckt und eine Inkrementalteilung sowie eine Absolutcodierung aufweist. Eine Abtasteinheit ist gegenüber der Maßverkörperung entlang der Messrichtung relativ beweglich angeordnet. Die Abtasteinheit weist eine Lichtquelle, ein Abtastgitter für die optische Abtastung der Inkrementalteilung sowie eine Detektoreinrichtung auf. Die Detektoreinrichtung umfasst einen Inkremental-Detektor zur Erzeugung von Inkrementalsignalen aus der optischen Abtastung der Inkrementalteilung sowie einen Absolut-Detektor zur Erzeugung von Absolutsignalen aus der optischen Abtastung der Absolutcodierung. Aus der Kombination der Absolut- und Inkrementalsignale lässt sich die exakte absolute Position der Abtasteinheit gegenüber der Maßverkörperung bestimmen.

Die EP 1043571 A1 offenbart eine andere optische Positionsmesseinrichtung gemäß dem Stand der Technik,

Derartige Positionsmesseinrichtungen werden beispielsweise in Anwendungen eingesetzt, in denen in einer Maschine hochgenau die Position eines beweglichen Maschinenteils gegenüber einem stationären Maschinenteil erfasst werden muss, um über eine Maschinensteuerung eine exakte Relativ-Positionierung dieser Maschinenteile vorzunehmen. Handelt es sich bei diesen Maschinen etwa um Werkzeugmaschinen, so resultieren für die optische Positionsmesseinrichtung Einsatzbedingungen, die ggf. die Funktionsfähigkeit derselbigen beeinträchtigen können. So ist es möglich, dass sich Verschmutzungen wie Kühlschmierstoffe oder Ölnebel auf optischen Komponenten der Positionsmesseinrichtung ablagern, insbesondere auf der z.B. als Glasmaßstab ausgebildeten Maßverkörperung. Dies kann im Extremfall den Ausfall der Positionsmesseinrichtung zur Folge haben. Zur Vermeidung derartiger verschmutzungsbedingter Ausfälle sind vielfältige Schutzmaßnahmen für optische Positionsmesseinrichtungen bekannt, um die Eintreffwahrscheinlichkeit solcher Verschmutzungen zu minimieren. Hierzu gehört etwa die Kapselung der Maßverkörperung mit Hilfe eines umgebenden Profils, das Durchspülen des Profils mittels Druckluft, das Anordnen von Filtern in Drucklufteinheiten usw.. Nicht in allen Fällen lässt sich dadurch aber verhindern, dass optische Komponenten der Positionsmesseinrichtung über derartige Einflüsse verschmutzt werden und es zur Beeinträchtigung der Funktionsfähigkeit der Positionsmesseinrichtung kommt.

**ZUSAMMENFASSUNG DER ERFINDUNG**

Der vorliegenden Erfindung liegt die Aufgabe zugrunde, eine optische Positionsmesseinrichtung zur absoluten Positionsbestimmung zu schaffen, über die eine möglichst verschmutzungsunempfindliche optische Abtastung einer Maßverkörperung ermöglicht wird und die auch im Falle einer eventuellen Verschmutzung optischer Komponenten eine zuverlässige Erzeugung von Positionssignalen gewährleistet.

Diese Aufgabe wird erfindungsgemäß durch eine optische Positionsmesseinrichtung mit den Merkmalen des Anspruchs 1 gelöst.

Vorteilhafte Ausführungen der erfindungsgemäßen optischen Positionsmesseinrichtung ergeben sich aus den Maßnahmen, die in den abhängigen Ansprüchen aufgeführt sind.

Die erfindungsgemäße optische Positionsmesseinrichtung zur absoluten Positionsbestimmung umfasst eine Maßverkörperung, die sich entlang einer Messrichtung erstreckt und mindestens eine Inkrementalteilung und eine Absolutcodierung aufweist sowie eine Abtasteinheit, die gegenüber der Maßverkörperung entlang der Messrichtung relativ beweglich angeordnet ist und welche eine Lichtquelle, ein Abtastgitter für die optische Abtastung der Inkrementalteilung sowie eine Detektoreinrichtung umfasst. Die Detektoreinrichtung weist einen Inkremental-Detektor zur Erzeugung von Inkrementalsignalen aus der optischen Abtastung der Inkrementalteilung sowie einen Absolut-Detektor zur Erzeugung von Absolutsignalen aus der optischen Abtastung der Absolutcodierung auf. Der Inkremental-Detektor und der Absolut-Detektor sind in einer gemeinsamen Detektionsebene angeordnet. Die Detektionsebene weist einen definierten Normalen-Abstand (v) vom Abtastgitter auf und/oder die Periodizität eines Streifenmusters auf dem Inkremental-Detektor ist derart gewählt, so dass im Fall einer streuenden Verschmutzung im Bereich der Maßverkörperung und/oder des Abtastgitters die Amplituden der Inkrementalsignale als auch die Amplituden der Absolutsignale gleichmäßig einbrechen.

In einer möglichen Ausführungsform ist der Normalen-Abstand (v) zwischen dem Abtastgitter und der Detektionsebene entweder gemäß

$$v = u \cdot \frac{\left(\frac{1}{d_1} - \frac{1}{2 \cdot d_{ABS}}\right)}{\left(\frac{1}{d_3} + \frac{1}{2 \cdot d_{ABS}}\right)} \pm 10\%$$

oder gemäß

$$v = u \cdot \frac{\left(\frac{1}{d_1} + \frac{1}{2 \cdot d_{ABS}}\right)}{\left(\frac{1}{d_3} - \frac{1}{2 \cdot d_{ABS}}\right)} \pm 10\%$$

gewählt, mit

v := Normalen-Abstand zwischen Abtastgitter und Detektionsebene

u := Normalen-Abstand zwischen Maßverkörperung und Abtastgitter

$d_1$ := Teilungsperiode der Inkrementalteilung auf der Maßverkörperung

$d_3$ := Periodizität des Streifenmusters auf dem Inkremental-Detektor

$d_{ABS}$ := Breite der kleinsten Struktur der Absolutcodierung in Messrichtung.

In einer weiteren Ausführungsform kann die Periodizität des Streifenmusters auf dem Inkremental-Detektor gemäß

$$d_3 = 2 \cdot d_{ABS} \pm 10\%$$

gewählt werden, mit

$d_3$ := Periodizität des Streifenmusters auf dem Inkremental-Detektor

$d_{ABS}$ := Breite der kleinsten Struktur der Absolutcodierung in Messrichtung

Alternativ ist auch möglich, dass der Normalen-Abstand (v) zwischen dem Abtastgitter und der Detektionsebene gemäß

$$v = \frac{1}{2} u \cdot d_3 \cdot \left(\frac{1}{d_1} - \frac{1}{2 \cdot d_{ABS}}\right) \pm 10\%$$

gewählt ist, mit

v := Normalen-Abstand zwischen Abtastgitter und Detektionsebene

u := Normalen-Abstand zwischen Maßverkörperung und Abtastgitter

$d_1$ := Teilungsperiode der Inkrementalteilung auf der Maßverkörperung

$d_3$ := Periodizität des Streifenmusters auf dem Inkremental-Detektor

$d_{ABS}$ := Breite der kleinsten Struktur der Absolutcodierung in Messrichtung

Mit Vorteil basiert die optische Abtastung der Inkrementalteilung auf einem Drei-Gitter-Abtast-Prinzip, wobei das erste beaufschlagte Gitter im Abtaststrahlengang die Inkrementalteilung, das zweite beaufschlagte Gitter das Abtastgitter und das dritte beaufschlagte Gitter der Inkremental-Detektor ist, welcher als strukturierter Detektor ausgebildet ist.

Es kann vorgesehen sein, dass die optische Abtastung der Absolutcodierung auf einem Schattenwurfprinzip basiert und dabei eine Projektion der Strukturen der Absolutcodierung ohne zwischengeschaltete optische Abbildungselemente in die Detektionsebene auf den Absolut-Detektor erfolgt.

Dabei kann die Absolutcodierung als Pseudo Random Code ausgebildet sein.

In einer möglichen Ausführungsform ist die Maßverkörperung als Durchlicht-Maßverkörperung ausgebildet, wobei die Inkrementalteilung als auch die Absolutcodierung jeweils alternierend angeordnete Bereiche mit unterschiedlichen Transmissionseigenschaften aufweisen.

Als vorteilhaft erweist sich, wenn der Abstand zwischen den einander zugewandten Seiten der Maßverkörperung und der Abtasteinheit kleiner gleich 50 $\mu$m gewählt ist.

Vorzugsweise umfasst die Abtasteinheit eine einzige Lichtquelle zur Beleuchtung der Inkrementalteilung und der Absolutcodierung.

Es ist desweiteren möglich, dass eine Regelungseinheit vorgesehen ist, welche in Abhängigkeit der Signalamplituden der periodischen Inkrementalsignale derart auf die Strahlstärke der Lichtquelle einwirkt, dass stets eine vorgegebene Signalamplitude der periodischen Inkrementalsignale resultiert.

Weiterhin vorteilhaft erweist sich, wenn der Inkremental-Detektor und der Absolut-Detektor gemeinsam auf einem Detektor-Chip angeordnet sind.

Es kann ferner vorgesehen werden, dass zwischen dem Abtastgitter und der Detektoreinrichtung zumindest teilweise ein transparentes Füllmedium mit einem Brechungsindex n > 1 angeordnet ist.

Desweiteren ist möglich, dass das Abtastgitter im Inneren des Füllmediums angeordnet ist.

Als maßgeblicher Vorteil der vorliegenden Erfindung resultiert eine besonders verschmutzungsunempfindliche optische Abtastung der Maßverkörperung. Über die durch die bekannten mechanischen Schutzmaßnahmen gewährleistete Verschmutzungsunempfindlichkeit hinaus lässt sich eine nochmals weitergehende Unempfindlichkeit insbesondere gegenüber streuenden Verschmutzungen sicherstellen. Unter streuenden Verschmutzungen seien hierbei derartige Verschmutzungen verstanden, über die sich die Ausbreitungsrichtung von Licht zumindest lokal ändert. Die Unempfindlichkeit kann hierbei mit einer einfachen und kostengünstigen Abtastoptik erreicht werden, die keine aufwändigen Komponenten wie z.B. Abbildungslinsen erfordert. Auch unter kritischen Bedingungen kann somit die Verfügbarkeit optischer Positionsmesseinrichtungen deutlich erhöht werden.

In bestimmten Anwendungen ist es hierbei sogar möglich, auf einen Teil der eingangs erwähnten mechanischen Schutzmaßnahmen zu verzichten, woraus sich deutliche Kostenvorteile der erfindungsgemäßen optischen Positionsmesseinrichtung ergeben können.

Weitere Einzelheiten und Vorteile der vorliegenden Erfindung seien anhand der nachfolgenden Beschreibung von Ausführungsbeispielen der erfindungsgemäßen Vorrichtung in Verbindung mit den Figuren erläutert.

## KURZE BESCHREIBUNG DER ZEICHNUNGEN

Es zeigt

Figur 1    eine schematisierte Schnittansicht eines ersten Ausführungsbeispiels der erfindungsgemäßen optischen Positionsmesseinrichtung;

Figur 2a    eine Draufsicht auf die Maßverkörperung des ersten Ausführungsbeispiels aus Figur 1;

Figur 2b    eine Draufsicht auf die Abtastplatte des ersten Ausführungsbeispiels aus Figur 1;

Figur 2c    eine Draufsicht auf die Detektoreinrichtung des ersten Ausführungsbeispiels aus Figur 1;

Figur 3    eine schematisierte Darstellung des Strahlengangs zur Inkrementalsignalerzeugung im ersten Ausführungsbeispiel inklusive relevanter Systemparameter;

Figur 4a    eine schematisierte Schnittansicht eines zweiten Ausführungsbeispiels der erfindungsgemäßen optischen Positionsmesseinrichtung;

Figur 4b    eine schematisierte Schnittansicht eines dritten Ausführungsbeispiels der erfindungsgemäßen optischen Positionsmesseinrichtung.

## BESCHREIBUNG DER AUSFÜHRUNGSFORMEN

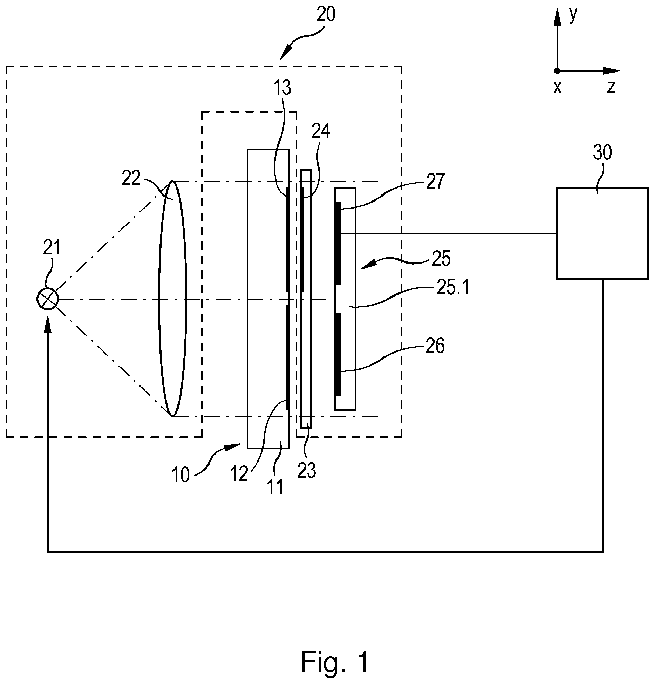

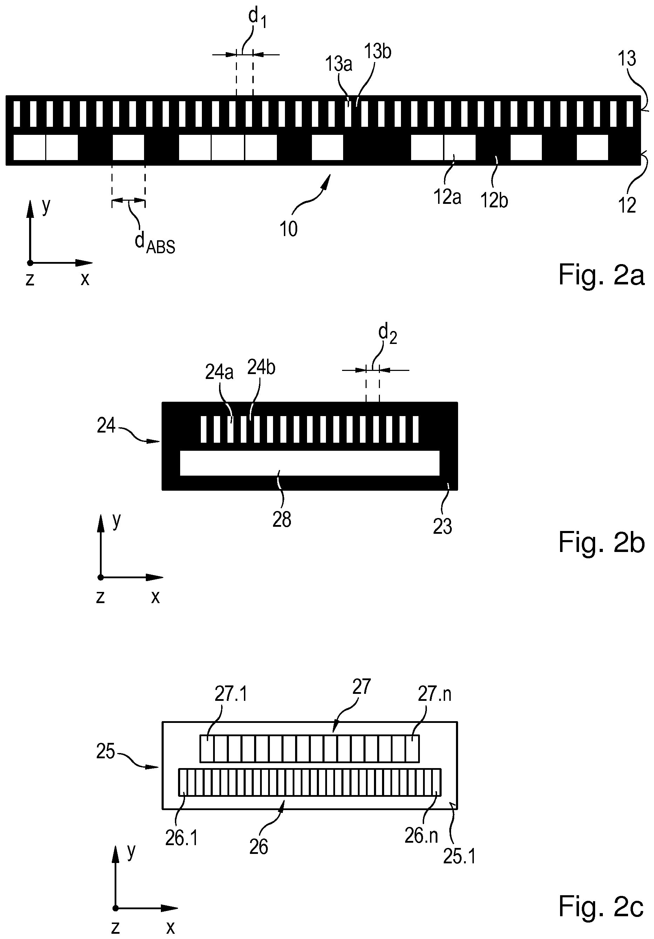

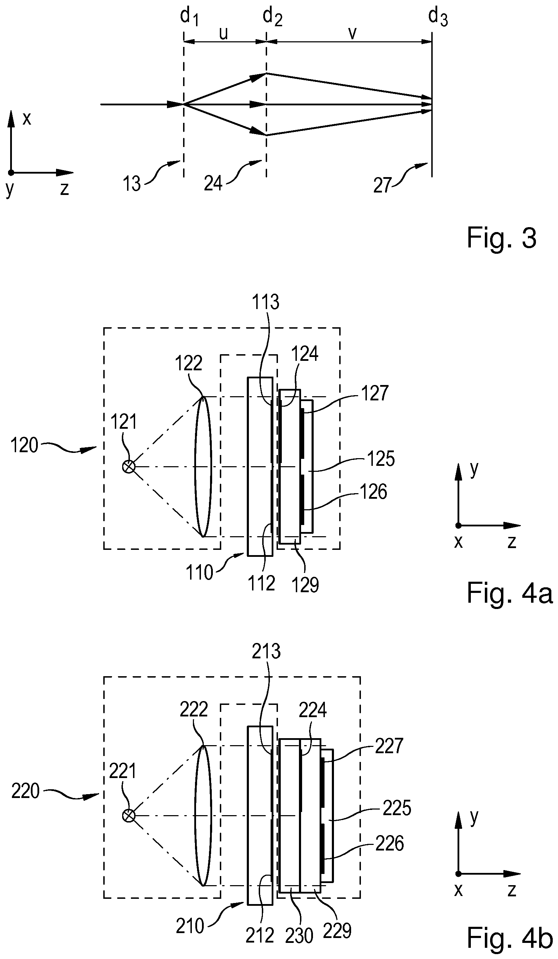

Ein erstes Ausführungsbeispiel der erfindungsgemäßen optischen Positionsmesseinrichtung sei nachfolgend anhand der Figuren 1, 2a - 2c und 3 erläutert. Hierbei zeigt Figur 1 eine schematisierte Schnittansicht, die Figuren 2a - 2c Draufsichten auf die Maßverkörperung, die Abtastplatte und die Detektoreinrichtung und Figur 3 eine Darstellung des Strahlengangs zur Inkrementalsignalerzeugung inklusive diverser Systemparameter.

Die in diesen Figuren dargestellte optische Positionsmesseinrichtung umfasst eine Maßverkörperung 10, die sich entlang einer linearen Messrichtung x erstreckt und eine Inkrementalteilung 13 sowie eine Absolutcodierung 12 aufweist. Gegenüber der Maßverkörperung 10 relativ beweglich entlang der Messrichtung x ist eine Abtasteinheit 20 vorgesehen, die zumindest eine Lichtquelle 21, ein auf einer Abtastplatte 23 angeordnetes Abtastgitter 24 zur Abtastung der Inkrementalteilung 13 sowie eine Detektoreinrichtung 25 aufweist. Hierbei umfasst die Detektoreinrichtung 25 einen Inkremental-Detektor 27 zur Erzeugung von Inkrementalsignalen aus der optischen Abtastung der Inkrementalteilung 13 sowie einen Absolut-Detektor 26 zur Erzeugung von Absolutsignalen aus der optischen Abtastung der Absolutcodierung 12. Der Inkremental-Detektor 27 und der Absolut-Detektor 26 sind in der Abtasteinheit 20 in einer gemeinsamen Detektionsebene angeordnet und zusammen auf einem Detektor-Chip 25.1 platziert. Im dargestellten Ausführungsbeispiel ist ferner eine Regelungseinheit 30 schematisiert angedeutet, die in Abhängigkeit der Signalamplituden der Inkrementalsignale auf die Lichtquelle 21 einwirkt. Die Einwirkung erfolgt hierbei dergestalt, dass stets eine vorgegebene Signalamplitude der Inkrementalsignale resultiert; im Fall einer reduzierten Signalamplitude der Inkrementalsignale wird über die Regelungseinheit 30 demzufolge etwa die Strahlstärke der Lichtquelle erhöht etc.. Vorzugsweise ist die Regelungseinheit 30, ausgebildet als elektronische Schaltung, ebenfalls in der Abtasteinheit 20 angeordnet. Die einzige Lichtquelle 21 in der erfindungsgemäßen optischen Positionsmesseinrichtung dient hierbei sowohl zur Beleuchtung der Inkrementalteilung 13 als auch zur Beleuchtung der Absolutcodierung 12 auf der Maßverkörperung 10.

Maßverkörperung 10 und Abtasteinheit 20 der erfindungsgemäßen optischen Positionsmesseinrichtung sind üblicherweise mit Maschinenkomponenten verbunden, die entlang der Messrichtung x relativ zueinander beweglich sind. Aus den mit Hilfe der optischen Positionsmesseinrichtung erzeugten Absolut- und Inkrementalsignalen lässt sich die absolute Position der Abtasteinheit 20 entlang der Messrichtung x gegenüber der Maßverkörperung 10 bestimmen und einer - nicht dargestellten - Maschinen-Steuereinheit zuführen, die damit die Bewegungssteuerung der beweglichen Maschinenkomponenten übernimmt. Alternativ zur Übertragung der Absolutpositionsinformation an die Maschinen-Steuereinheit, z.B. über eine geeignete serielle Datenschnittstelle, kann selbstverständlich auch die Übertragung der über die erfindungsgemäße Positionsmesseinrichtung erzeugten Absolut- und Inkrementalsignale an die Maschinen-Steuereinheit vorgesehen sein, die dann erst die übertragenen Absolut- und Inkrementalsignale zu einem Absolutpositionswert kombiniert.

Die erfindungsgemäße optische Positionsmesseinrichtung ist im dargestellten ersten Ausführungsbeispiel als Durchlichtsystem ausgebildet. Als Maßverkörperung 10 fungiert eine Durchlicht-Maßverkörperung, bestehend aus einem Maßverkörperungsträger 11, beispielsweise einer Glaslamelle, die auf einer Oberfläche zwei parallele Spuren aufweist, welche sich entlang der Messrichtung x erstrecken und in denen die Inkrementalteilung 13 sowie die Absolutcodierung 12 angeordnet sind. Die Inkrementalteilung 13 und die Absolutcodierung 12 weisen dabei jeweils alternierend angeordnete Bereiche 13a, 13b bzw. 12a, 12b mit unterschiedlichen Transmissionseigenschaften auf, d.h. die Inkrementalteilung 13 und die Absolutcodierung 12 sind als Amplitudengitter ausgebildet. Vorliegend sind die schwarz dargestellten Bereiche 12b, 13b undurchlässig ausgebildet und die hell dargestellten Bereiche 12a, 13a durchlässig.

Die Erzeugung der Absolutsignale erfolgt im dargestellten Ausführungsbeispiel über die optische Abtastung der Absolutcodierung 12 mittels eines Schattenwurfprinzips. Dabei wird die als Pseudo Random Code (PRC) mit aperiodisch angeordneten durchlässigen und undurchlässigen Bereichen 12a, 12b ausgebildete Absolutcodierung 12 auf der Maßverkörperung 10 mit einem über die Linse 22 kollimierten Strahlenbündel beleuchtet und die Strukturen bzw. Bereiche 12a, 12b der Absolutcodierung 12 ohne zwischengeschaltete optische Abbildungselemente in die Detektionsebene des Absolut-Detektors 26 projiziert. Die entsprechenden Strahlenbündel durchtreten nach dem Passieren der Absolutcodierung 12 auf der Maßverkörperung 10 einen durchlässigen Fensterbereich 28 in der Abtastplatte 23, der dort in y-Richtung benachbart zum Abtastgitter 24 vorgesehen ist und treffen dann in der Detektionsebene auf den Absolut-Detektor 26. Der Absolut-Detektor 26 ist wie aus Figur 2c ersichtlich als Zeilensensor bzw. CCD-Array ausgebildet, der aus einer Vielzahl einzelner rechteckförmiger, elektrooptischer Detektorelemente 26.1 - 26.n besteht, die in Messrichtung x benachbart zueinander angeordnet sind.

Zur Erzeugung der Inkrementalsignale aus der Inkrementalteilung 13 wird in der erfindungsgemäßen optischen Positionsmesseinrichtung ein Drei-Gitter-Abtastprinzip genutzt, wie es etwa aus der Veröffentlichung von R. Pettigrew mit dem Titel "Analysis of Grating Imaging and its Application to Displacement Metrology" in SPIE Vol. 36, 1st European Congress on Optics applied to Metrology (1977), S. 325 - 33 bekannt ist. Dabei stellt die periodische Inkrementalteilung 13 das erste Gitter im Abtaststrahlengang dar, das von dem über die Linse 22 kollimierten Strahlenbündel beleuchtet wird. Die Inkrementalteilung 13 besitzt die Teilungsperiode $d_1$, welche die Summe der Breiten aufeinanderfolgend angeordneter durchlässiger und undurchlässiger Inkrementalteilungsbereiche 13a, 13b in Messrichtung x angibt. Als zweites beaufschlagtes Gitter im Abtaststrahlengang fungiert das Abtastgitter 24 in der Abtasteinheit 20, das im Normalen-Abstand u in Strahlausbreitungsrichtung beabstandet von der Inkrementalteilung 13 angeordnet ist. Das vorliegend als Amplitudengitter ausgebildete Abtastgitter 24 besitzt die Teilungsperiode $d_2$, welche die Summe der Breiten aufeinanderfolgend angeordneter durchlässiger und undurchlässiger Abtastgitterbereiche 24a, 24b im Abtastgitter 24 in Messrichtung x angibt. Das dritte und letzte Gitter im Inkrementalsignal-Abtaststrahlengang stellt schließlich der Inkremental-Detektor 27 dar, der als strukturierter Detektor ausgebildet ist und aus einer Vielzahl rechteckförmiger, elektrooptischer Detektorelemente 27.1 - 27.n in der Detektionsebene besteht, die dort periodisch entlang der Messrichtung x angeordnet sind. Der Inkremental-Detektor 27 ist hierbei in Strahlausbreitungsrichtung im Normalen-Abstand v beabstandet vom Abtastgitter 24 angeordnet.

In der Detektionsebene bzw. auf dem Inkrementaldetektor 27 resultiert bei dieser Abtastung aus der Wechselwirkung der von der Lichtquelle 21 emittierten Strahlenbündel mit der Inkrementalteilung 13 und dem Abtastgitter 24 ein periodisches Streifenmuster, wobei das Streifenmuster die Periodizität $d_3$ aufweist. Aus der vorstehend genannten Veröffentlichung sind hierbei die in den folgenden Gleichungen 1) und 2) aufgeführten Zusammenhänge zwischen der Periodizität $d_3$ des Streifenmusters und den anderen geometrischen Systemparametern der erfindungsgemäßen optischen Positionsmesseinrichtung bekannt:

$$d_3 = d_2 \cdot \frac{u+v}{u} \qquad \text{(Gl. 1)}$$

$$d_1 = d_2 \cdot \frac{u+v}{v} \qquad \text{(Gl. 2)}$$

mit:

$d_1$ := Teilungsperiode der Inkrementalteilung auf der Maßverkörperung
$d_2$ := Teilungsperiode des Abtastgitters
$d_3$ := Periodizität des Streifenmusters auf dem Inkremental-Detektor
v := Normalen-Abstand zwischen Abtastgitter und Detektionsebene
u := Normalen-Abstand zwischen Maßverkörperung und Abtastgitter

Im Fall einer Relativbewegung von Maßverkörperung 10 und Abtasteinheit 20 entlang der Messrichtung x wandert das erzeugte Streifenmuster in der Detektionsebene über den Inkremental-Detektor 27. Mit Hilfe der Vielzahl von Detektorelementen 27.1 - 27.n des Inkremental-Detektors 27 lassen sich hierbei in bekannter Art und Weise mehrere zueinander phasenverschobene, sinusförmige Inkrementalsignale erzeugen, beispielsweise drei um 120° zueinander phasenverschobene Inkrementalsignale oder aber vier um jeweils 90° zueinander phasenverschobene Inkrementalsignale.

Aus der Kombination bzw. Verrechnung der derart erzeugten, hochauflösenden Inkrementalsignale mit den grobauflösenden Absolutsignalen kann dann in üblicher Art und Weise z.B. die Absolutposition der beweglichen Abtasteinheit 20 entlang der Messrichtung x bestimmt werden.

Im Rahmen der vorliegenden Erfindung wurde nunmehr erkannt, dass insbesondere über eine streuende Verschmutzung bestimmter Komponenten im Abtaststrahlengang die Empfindlichkeit des Gesamtsystems erheblich beeinflusst wird. Hierbei sei unter einer streuenden Verschmutzung eine Verschmutzung verstanden, durch die die Richtung von darauf auftreffenden Lichtstrahlen zumindest lokal von seiner ursprünglichen Richtung geändert wird. Es ist dabei möglich, dass eine solche streuende Verschmutzung etwa nur an der Maßverkörperung 10, nur am Abtastgitter 24 oder ggf. sowohl auf Maßverkörperung 10 und Abtastgitter 24 auftritt. Verschmutzungsgefährdet sind hierbei primär die beiden Oberflächen der Maßverkörperung 10 sowie diejenige Seite der Abtastplatte 23 mit dem Abtastgitter 24, die in Richtung Maßverkörperung 10 orientiert ist. Verursacht werden kann eine streuende Verschmutzung im Betrieb etwa durch Flüssigkeitstropfen, die sich auf den Oberflächen der erwähnten Komponenten ansammeln, beispielsweise kondensierende Kühlschmierstoffe, Ölnebel etc., wie sie in den oben erwähnten Anwendungen typischerweise auftreten.

Der negative Einfluss derartiger streuender Verschmutzung auf die Abtastung lässt sich erfindungsgemäß minimieren, indem bestimmte geometrische Bedingungen bezüglich einzelner System-Parameter in der optischen Positionsmesseinrichtung eingehalten werden. Hierzu zählt die Wahl eines definierten Normalen-Abstands v zwischen der Detektionsebene und dem Abtastgitter 24 und/oder die Wahl einer definierten Periodizität $d_3$ des erzeugten Streifenmusters auf dem Inkremental-Detektor 17. Der Normalen-Abstand v und/oder die Periodizität $d_3$ werden hierbei erfindungsgemäß derart gewählt, dass im Fall einer streuenden Verschmutzung im Bereich der Maßverkörperung 10 und/oder des Abtastgitters 24 die Amplituden der Inkrementalsignale als auch die Amplituden der Absolutsignale gleichmäßig einbrechen. Es wird demnach erfindungsgemäß angestrebt, dass die streuende Verschmutzung den möglichst gleichen Einfluss auf die Inkrementalsignale als auch auf die Absolutsignale ausübt. Hierzu ist es gemäß der vorliegenden Erfindung erforderlich, dass bestimmte geometrische System-Parameter anders gewählt werden, als dies die zugehörige Theorie der Inkrementalsignalerzeugung bzw.

Absolutsignalerzeugung erfordern würde. Im Fall des Einsatzes einer Lichtquellenregelung hat der gleiche Einfluss der streuenden Verschmutzung auf beide Signale dann zur Folge, dass über die entsprechende Regelungseinheit 30 beide Signale gleichwertig kompensiert werden können. Es liegen damit auch bei einer streuenden Verschmutzung konstante Inkremental- und Absolutsignale vor; die Verfügbarkeit der erfindungsgemäßen optischen Positionsmesseinrichtung kann damit erheblich gesteigert werden.

Es hat sich hierbei gezeigt, dass eine Wahl des Normalen-Abstands v zwischen dem Abtastgitter 24 und der Detektionsebene gemäß einer der beiden nachfolgenden Beziehungen 3.1) oder 3.2) als vorteilhaft in Bezug auf streuende Verschmutzung an der Maßverkörperung 10 erweist und die Verschmutzungsunempfindlichkeit des Gesamtsystems erheblich verbessert:

$$v = u \cdot \frac{\left(\frac{1}{d_1} - \frac{1}{2 \cdot d_{ABS}}\right)}{\left(\frac{1}{d_3} + \frac{1}{2 \cdot d_{ABS}}\right)} \pm 10\% \qquad (\text{Gl. } 3.1)$$

$$v = u \cdot \frac{\left(\frac{1}{d_1} + \frac{1}{2 \cdot d_{ABS}}\right)}{\left(\frac{1}{d_3} - \frac{1}{2 \cdot d_{ABS}}\right)} \pm 10\% \qquad (\text{Gl. } 3.2)$$

mit:

v := Normalen-Abstand zwischen Abtastgitter und Detektionsebene
u := Normalen-Abstand zwischen Maßverkörperung und Abtastgitter
$d_1$ := Teilungsperiode der Inkrementalteilung auf der Maßverkörperung
$d_3$ := Periodizität des Streifenmusters auf dem Inkremental-Detektor
$d_{ABS}$ := Breite der kleinsten Struktur der Absolutcodierung in Messrichtung

Die angegebene Toleranz von ca. ± 10% in Bezug auf den idealen, theoretischen Normalen-Abstand v resultiert aus experimentellen Untersuchungen. Diese haben gezeigt, dass die erfindungsgemäße Wahl des Normalen-Abstands v innerhalb eines bestimmten Toleranzbereichs um den idealen Wert noch ein hinreichend gutes Verhalten im Fall von streuender Verschmutzung gewährleistet.

In einem konkreten Ausführungsbeispiel der erfindungsgemäßen optischen Positionsmesseinrichtung mit den Systemparametern $d_1 = 20\mu m$, $d_3 = 80\mu m$, u = 0.376mm, $d_{ABS} = 210\mu m$ und $\lambda = 850nm$ ergeben sich die optimierten Normalenabstände v = 1.203mm ± 10% gemäß Gleichung 3.1) und v = 1.946mm ± 10% gemäß Gleichung 3.2) für ein deutlich verschmutzungsunempfindlicheres Gesamtsystem.

Im Fall einer streuenden Verschmutzung im Bereich des Abtastgitters 24 ist erfindungsgemäß eine erheblich gesteigerte Verschmutzungsunempfindlichkeit zu erreichen, wenn die Periodizität $d_3$ des Streifenmusters auf dem Inkremental-Detektor 27 gleich der doppelten Breite $d_{ABS}$ der kleinsten Struktur der Absolutcodierung 12 entlang der Messrichtung x zuzüglich einer bestimmten Toleranz gewählt ist, d.h.

$$d_3 = 2 \cdot d_{ABS} \pm 10\% \quad (\text{Gl. } 4)$$

mit:

$d_3$ := Periodizität des Streifenmusters auf dem Inkremental-Detektor

$d_{ABS}$ := Breite der kleinsten Struktur der Absolutcodierung in Messrichtung

In diesem Fall kann die Detektionsebene bei Einhaltung der vorgenannten Bedingung 4) in jedem beliebigen Normalenabstand v vom Abtastgitter 24 platziert werden; die erhöhte Verschmutzungsunempfindlichkeit ist gewährleistet. Ausgehend von der Periodizität $d_3$ des periodischen Streifenmusters auf dem Inkremental-Detektor 27 und den weiteren Systemparametern u, $d_1$ wird unter Anwendung der o.g. Gleichungen 1) und 2) die Größe $d_2$ bestimmt und schließlich auf Grundlage der Gleichungen 3.1) / 3.2) der Normalen-Abstand v festgelegt.

Ist eine streuende Verschmutzung sowohl auf der Maßverkörperung 10 als auch im Bereich des Abtastgitters 24 zu erwarten, so wird erfindungsgemäß der Normalen-Abstand v zwischen dem Abtastgitter 24 und der Detektionsebene gemäß nachfolgender Gleichung 5) gewählt:

$$v = \frac{1}{2} u \cdot d_3 \cdot \left( \frac{1}{d_1} - \frac{1}{d_{ABS}} \right) \quad \pm 10\% \qquad \text{(Gl. 5)}$$

mit:

v := Normalen-Abstand zwischen Abtastgitter und Detektionsebene

u := Normalen-Abstand zwischen Maßverkörperung und Abtastgitter

$d_1$ := Teilungsperiode der Inkrementalteilung auf der Maßverkörperung

$d_3$ := Periodizität des Streifenmusters auf dem Inkremental-Detektor

$d_{ABS}$ := Breite der kleinsten Struktur der Absolutcodierung in Messrichtung

In einem konkreten Ausführungsbeispiel der erfindungsgemäßen optischen Positionsmesseinrichtung mit den Systemparametern $d_1$ = 20μm, $d_3$ = 80μm, u = 0.376mm, $d_{ABS}$ = 210μm und λ = 850nm ergibt sich der Normalenabstand v = 0.716mm ± 10% für ein erheblich verschmutzungsunempfindlicheres Gesamtsystem.

In der Praxis lassen sich das Abtastgitter 24 und/oder das Volumen zwischen Abtastgitter 24 und den Detektoren 26, 27 meist sehr gut kapseln, d.h. gegenüber Umgebungseinwirkungen wirksam abschirmen. Die Maßverkörperung 10, bei Durchlichtsystemen insbesondere deren Rückseite, ist hingegen ungeschützt, so dass z.B. darauf kondensierende Flüssigkeiten in Form von Tröpfchen einen sich darauf ausbildenden, stark streuenden Film darstellen. Für eine derartige Form einer streuenden Verschmutzung ist dann etwa eine Optimierung der erfindungsgemäßen optischen Positionsmesseinrichtung gemäß den o.g. Gleichungen 3.1) oder 3.2) vorteilhaft.

Die Verschmutzung auf der ungeschützten Seite der Abtastplatte 23 und derjenigen Seite der Maßverkörperung 10, die der Abtastplatte 23 zugewandt ist, lässt sich in der Praxis desweiteren durch einen sehr engen Abtastspalt im Bereich zwischen 10 - 100μm begrenzen, vorzugsweise durch einen Abtastspalt kleiner als 50μm. Als Abtastspalt sei hierbei der Raum zwischen den einander zugewandten Seiten bzw. begrenzenden Flächen der Maßverkörperung 10 einerseits und der Abtasteinheit 20 andererseits verstanden. Es können sich dann lediglich sehr kleine Tröpfchen im Abtastspalt bilden. Auf der gegenüberliegenden Vorderseite der Maßverkörperung 10, die abgewandt zur Abtasteinheit 20 orientiert ist, existiert diese Begrenzung nicht. Eine Optimierung der erfindungsgemäßen optischen Positionsmesseinrichtung gemäß den Beziehungen 3.1) bzw. 3.2) ist damit besonders vorteilhaft. Damit wird das Gesamtsystem gleichzeitig auch bezüglich einer Verschmutzung der Vorderseite der Maßverkörperung 10 optimiert, so dass als einzig verschmutzbare Fläche mit erhöhter Empfindlichkeit die nach außen orientierte Fläche der Abtastplatte 23 verbleibt.

Eine Schnittansicht eines zweiten und dritten Ausführungsbeispiels der erfindungsgemäßen optischen Positionsmesseinrichtung ist jeweils in den Figuren 4a und 4b gezeigt. Im folgenden sollen lediglich die maßgeblichen Unterschiede zum ersten Ausführungsbeispiel erläutert werden.

So ist im zweiten Ausführungsbeispiel gemäß Figur 4a vorgesehen, im Raum zwischen dem Abtastgitter 124 und der Detektoreinrichtung 127 zumindest teilweise ein transparentes Füllmedium 129 anzuordnen, das einen Brechungsindex n > 1 besitzt. Als entsprechendes Füllmedium 129 kann z.B. Glas oder ein transparentes Kunststoffmaterial vorgesehen werden, das hier plattenförmig ausgebildet und im Bereich zwischen Abtastgitter 124 und Detektoreinrichtung 127 angeordnet ist. Das Füllmedium 129 kann im Übrigen auch mehrere Materialien umfassen, beispielsweise Glas und eine geeignet gewählte Klebstoffschicht. Im dargestellten Beispiel füllt das Füllmedium 129 diesen Bereich vollständig aus. Das Abtastgitter 124 ist hierbei auf derjenigen Seite des Füllmediums 129 angeordnet, die in Richtung der Maßverkörperung 110 orientiert ist. Über das Füllmedium 129 kann der Normalenabstand v zwischen dem Abtastgitter 124 und der Detektoreinrichtung 127 sehr exakt eingestellt werden. Darüber hinaus ist damit sichergestellt, dass keine kondensierenden Flüssigkeiten in den Bereich zwischen Abtastgitter 124 und Detektoreinrichtung 127 eindringen können und auf diese Art und Weise ggf. die Signalerzeugung gestört wird.

Ist ein derartiges Füllmedium 129 im Bereich zwischen dem Abtastgitter 124 und der Detektoreinrichtung 127 bzw. der Detektionsebene vorgesehen, so ist bei Anwendung der vorstehend erläuterten Gleichungen zu beachten, dass der Normalenabstand v bezüglich des Brechungsindex n des Füllmediums 129 korrigiert wird, da die entsprechenden Strahlenbündel dann veränderte optische Weglängen durchlaufen. Dies bedeutet, dass in den vorgenannten Gleichungen der Normalenabstand v jeweils durch den Ausdruck v/n zu ersetzen ist.

Im dritten Ausführungsbeispiel gemäß Figur 4b ist eine Modifikation der vorhergehenden zweiten Variante gezeigt. So ist in der Abtasteinheit 220 der Raum vor der Detektoreinrichtung 227 wiederum vollständig mit einem transparenten, plattenförmigen Füllmedium ausgefüllt, welches im vorliegenden Ausführungsbeispiel aus den beiden Glasplatten 229, 230 besteht; das als Phasen- oder Amplitudengitter ausgebildete Abtastgitter 224 ist nunmehr jedoch im Inneren des Füllmediums angeordnet. und dadurch gegenüber Beschädigung bzw. Verschmutzung geschützt. Derartige Amplituden- bzw. Phasengitter lassen sich etwa auf die als Trägerglas fungierende Glasplatte 229 aufbringen, die dann auf die andere Glasplatte 230 aufgeklebt wird. Auf diese Art und Weise kann desweiteren ein besonders kleiner Abstand zwischen der auf der Maßverkörperung 210 angeordneten Inkrementalteilung 213 und der Grenzfläche der Abtasteinheit 220 ausgebildet werden, über den sich ein Plattdrücken von Flüssigkeitströpfchen auf der Oberfläche der Maßverkörperung 10 bewirken lässt.

Neben den konkret beschriebenen Ausführungsbeispielen existieren im Rahmen der vorliegenden Erfindung selbstverständlich noch weitere Ausgestaltungsmöglichkeiten.

So ist es beispielsweise auch möglich, dass die Inkrementalteilung und die Absolutcodierung nicht wie im erläuterten Ausführungsbeispiel in zwei separaten Spuren auf der Maßverkörperung angeordnet sind, sondern in einer gemeinsamen Spur integriert sind, die von einer einzigen Lichtquelle beleuchtet wird.

Alternativ zur Ausbildung als Amplitudengitter oder als Phasengitter mit einem Phasenhub von 90° kann das Abtastgitter auch als Phasengitter mit einem Phasenhub von 180° ausgebildet sein. In der oben erwähnten Veröffentlichung von R. Pettigrew bzgl. des Abtastprinzips zur Inkrementalsignalerzeugung entspricht dies der Darstellung im sog. Beugungsbild. In diesem Fall muss in den Beziehungen 1) und 2) die Teilungsperiode $d_2$ durch 1/2 $d_2$ ersetzt werden, die Beziehungen 3.1), 3.2), 4) und 5) gelten unverändert.

Desweiteren ist es nicht zwingend, dass in der Abtasteinheit der Raum zwischen dem Abtastgitter und der Detektoreinrichtung vollständig mit einem transparenten Füllmedium mit einem Brechungsindex n > 1 gefüllt ist; denkbar ist etwa auch, dass dieser Raum lediglich teilweise mit einem entsprechenden Füllmedium gefüllt ist. In diesem Fall erweist sich jedoch als vorteilhaft, wenn luftgefüllte Raumbereiche zwischen dem Abtastgitter und der Detektoreinrichtung geeignet abgedichtet werden, um dort Verschmutzungen zu vermeiden.

Selbstverständlich können sowohl lineare als auch rotatorische optische Positionsmesseinrichtungen erfindungsgemäß ausgebildet werden usw..

**Patentansprüche**

1. Optische Positionsmesseinrichtung zur absoluten Positionsbestimmung mit

   - einer Maßverkörperung (10) die sich entlang einer Messrichtung erstreckt und mindestens eine Inkrementalteilung (13) und eine Absolutcodierung (14) 5 umfasst und
   - einer Abtasteinheit (20), die gegenüber der Maßverkörperung entlang der Messrichtung relativ beweglich angeordnet ist und eine Lichtquelle (21), ein Abtastgitter (24) für die optische Abtastung der Inkrementalteilung sowie eine Detektoreinrichtung (25) aufweist, wobei
   - die Detektoreinrichtung (25) einen Inkremental-Detektor (27) zur Erzeugung von Inkrementalsignalen aus der optischen Abtastung der Inkrementalteilung sowie einen Absolut-Detektor (26) zur Erzeugung von Absolutsignalen aus der optischen Abtastung der Absolutcodierung umfasst und der Inkremental-Detektor (27) und der Absolut-Detektor (26) in einer gemeinsamen Detektionsebene angeordnet sind,

   **dadurch gekennzeichnet, dass** die Detektionsebene einen definierten Normalen-Abstand (v) vom Abtastgitter aufweist und/oder die Periodizität ($d_3$) eines Streifenmusters auf dem Inkremental-Detektor (27; 127; 227) derart gewählt ist, so dass im Fall einer streuenden Verschmutzung im Bereich der Maßverkörperung (10; 110; 210) und/oder des Abtastgitters (24; 124; 224) die Amplituden der Inkrementalsignale als auch die Amplituden der Absolutsignale gleichmäßig einbrechen.

2. Optische Positionsmesseinrichtung nach Anspruch 1, **dadurch gekennzeichnet, dass** der Normalen-Abstand (v) zwischen dem Abtastgitter (24; 124; 224) und der Detektionsebene entweder gemäß

$$v = u \cdot \frac{\left(\frac{1}{d_1} - \frac{1}{2 \cdot d_{ABS}}\right)}{\left(\frac{1}{d_3} + \frac{1}{2 \cdot d_{ABS}}\right)} \pm 10\%$$

oder gemäß

$$v = u \cdot \frac{\left(\frac{1}{d_1} + \frac{1}{2 \cdot d_{ABS}}\right)}{\left(\frac{1}{d_3} - \frac{1}{2 \cdot d_{ABS}}\right)} \pm 10\%$$

gewählt ist, mit

   v := Normalen-Abstand zwischen Abtastgitter und Detektionsebene

$u :=$ Normalen-Abstand zwischen Maßverkörperung und Abtastgitter

$d_1 :=$ Teilungsperiode der Inkrementalteilung auf der Maßverkörperung

$d_3 :=$ Periodizität des Streifenmusters auf dem Inkremental-Detektor

$d_{ABS} :=$ Breite der kleinsten Struktur der Absolutcodierung in Messrichtung

3. Optische Positionsmesseinrichtung nach Anspruch 1, **dadurch gekennzeichnet, dass** die Periodizität ($d_3$) des Streifenmusters auf dem Inkremental-Detektor (27; 127; 227) gemäß

$$d_3 = 2 \cdot d_{ABS} \pm 10\%$$

gewählt ist, mit

$d_3 :=$ Periodizität des Streifenmusters auf dem Inkremental-Detektor

$d_{ABS} :=$ Breite der kleinsten Struktur der Absolutcodierung in Messrichtung

4. Optische Positionsmesseinrichtung nach Anspruch 1, **dadurch gekennzeichnet, dass** der Normalen-Abstand (v) zwischen dem Abtastgitter (24; 124; 224) und der Detektionsebene gemäß

$$v = \frac{1}{2} u \cdot d_3 \cdot \left( \frac{1}{d_1} - \frac{1}{2 \cdot d_{ABS}} \right) \pm 10\%$$

gewählt ist, mit

$v :=$ Normalen-Abstand zwischen Abtastgitter und Detektionsebene

$u :=$ Normalen-Abstand zwischen Maßverkörperung und Abtastgitter

$d_1 :=$ Teilungsperiode der Inkrementalteilung auf der Maßverkörperung

$d_3 :=$ Periodizität des Streifenmusters auf dem Inkremental-Detektor

$d_{ABS} :=$ Breite der kleinsten Struktur der Absolutcodierung in Messrichtung

5. Optische Positionsmesseinrichtung nach mindestens einem der Ansprüche 1 - 4, **dadurch gekennzeichnet, dass** die optische Abtastung der Inkrementalteilung (13; 113; 213) auf einem Drei-Gitter-Abtast-Prinzip basiert, wobei das erste beaufschlagte Gitter im Abtaststrahlengang die Inkrementalteilung (13; 113; 213), das zweite beaufschlagte Gitter das Abtastgitter (24; 124; 224) und das dritte beaufschlagte Gitter der Inkremental-Detektor (27; 127; 227) ist, welcher als strukturierter Detektor ausgebildet ist.

6. Optische Positionsmesseinrichtung nach mindestens einem der Ansprüche 1 - 4, **dadurch gekennzeichnet, dass** die optische Abtastung der Absolutcodierung (12; 112; 212) auf einem Schattenwurfprinzip basiert und dabei eine Projektion der Strukturen der Absolutcodierung (12; 112; 212) ohne zwischengeschaltete optische Abbildungselemente in die Detektionsebene auf den Absolut-Detektor (26; 126; 226) erfolgt.

7. Optische Positionsmesseinrichtung nach Anspruch 6, **dadurch gekennzeichnet, dass** die Absolutcodierung (12; 112; 212) als Pseudo Random Code ausgebildet ist.

8. Optische Positionsmesseinrichtung nach mindestens einem der Ansprüche 1 - 4, **dadurch gekennzeichnet, dass** die Maßverkörperung (10; 110; 210) als Durchlicht-Maßverkörperung ausgebildet ist, wobei die Inkrementalteilung (13; 113; 213) als auch die Absolutcodierung (12; 112; 212) jeweils alternierend angeordnete Bereiche mit unterschiedlichen Transmissionseigenschaften aufweisen.

9. Optische Positionsmesseinrichtung nach Anspruch 1, **dadurch gekennzeichnet, dass** der Abtastspalt zwischen den einander zugewandten Seiten der Maßverkörperung (10; 110; 210) und der Abtasteinheit (20; 120; 220) kleiner gleich $50\mu m$ gewählt ist.

10. Optische Positionsmesseinrichtung nach Anspruch 1, **dadurch gekennzeichnet, dass** die Abtasteinheit (20; 120; 220) eine einzige Lichtquelle (21; 121; 221) zur Beleuchtung der Inkrementalteilung (13; 113; 213) und der Absolutcodierung (12; 112; 212) umfasst.

11. Optische Positionsmesseinrichtung nach Anspruch 1, **gekennzeichnet durch** eine Regelungseinheit (30), welche in Abhängigkeit der Signalamplituden der periodischen Inkrementalsignale derart auf die Strahlstärke der Lichtquelle (21; 121; 221) einwirkt, dass stets eine vorgegebene Signalamplitude der periodischen Inkrementalsignale resultiert.

12. Optische Positionsmesseinrichtung nach Anspruch 1, **dadurch gekennzeichnet, dass** der Inkremental-Detektor (27; 127; 227) und der Absolut-Detektor (26; 126; 226) gemeinsam auf einem Detektor-Chip angeordnet sind.

13. Optische Positionsmesseinrichtung nach Anspruch 1, **dadurch gekennzeichnet, dass** zwischen dem Abtastgitter (24; 124; 224) und der Detektoreinrichtung (25; 125; 225) zumindest teilweise ein transparentes Füllmedium mit einem Brechungsindex n > 1 angeordnet ist.

14. Optische Positionsmesseinrichtung nach Anspruch 1, **dadurch gekennzeichnet, dass** das Abtastgitter (24; 124; 224) im Inneren des Füllmediums angeordnet ist.

**Claims**

1. Optical position measuring device for determining the absolute position, having

    - a material measure (10) that extends along a measurement direction and comprises at least one incremental graduation (13) and an absolute encoding, and
    - a scanning unit (20) that is arranged to move relatively in relation to the material measure along the measuring direction and that has a light source (21), a scanning grating (24) for optical scanning of the incremental graduation and a detector device (25), wherein
    - the detector device (25) comprises an incremental detector (27) for producing incremental signals from the optical scanning of the incremental graduation and an absolute detector (26) for producing absolute signals from the optical scanning of the absolute encoding, and the incremental detector (27) and the absolute detector (26) are arranged in a common detection plane,

    **characterized**
    **in that** the detection plane has a defined normal distance (v) from the scanning grating and/or the periodicity ($d_3$) of a stripe pattern on the incremental detector (27; 127; 227) is selected in such a way that the amplitudes of the incremental signals and amplitudes of the absolute signals refract in uniformly in the case of a scattering contaminant in the region of the material measure (10; 110; 210) and/or of the scanning grating (24; 124; 224).

2. Optical position measuring device according to Claim 1, **characterized in that** the normal distance (v) between the scanning grating (24; 124; 224) and the detection plane is selected either according to

$$v = u \cdot \frac{\left(\frac{1}{d_1} - \frac{1}{2 \cdot d_{ABS}}\right)}{\left(\frac{1}{d_3} + \frac{1}{2 \cdot d_{ABS}}\right)} \pm 10\%$$

or according to

$$v = u \cdot \frac{\left(\frac{1}{d_1} + \frac{1}{2 \cdot d_{ABS}}\right)}{\left(\frac{1}{d_3} - \frac{1}{2 \cdot d_{ABS}}\right)} \pm 10\%$$

where

    v := normal distance between the scanning grating and the detection plane
    u := normal distance between the material measure and the scanning grating
    $d_1$ := division period of the incremental graduation on the material measure
    $d_3$ := periodicity of the stripe pattern on the incremental detector
    $d_{ABS}$ := width of the smallest structure of the absolute encoding in the measurement direction.

3. Optical position measuring device according to Claim 1, **characterized in that** the periodicity ($d_3$) of the stripe pattern on the incremental detector (27; 127; 227) is selected according to

$$d_3 = 2 \cdot d_{ABS} \pm 10\%$$

where

    $d_3$ := periodicity of the stripe pattern on the incremental detector
    $d_{ABS}$ := width of the smallest structure of the absolute encoding in the measurement direction.

4. Optical position measuring device according to Claim 1, **characterized in that** the normal distance (v) between the scanning grating (24; 124; 224) and the detection plane is selected according to

$$v = \frac{1}{2} u \cdot d_3 \cdot \left(\frac{1}{d_1} - \frac{1}{2 \cdot d_{ABS}}\right) \pm 10\%$$

where

    v := normal distance between the scanning grating and the detection plane
    u := normal distance between the material measure and the scanning grating
    $d_1$ := division period of the incremental graduation on the material measure
    $d_3$ := periodicity of the stripe pattern on the incremental detector
    $d_{ABS}$ := width of the smallest structure of the absolute encoding in the measurement direction.

5. Optical position measuring device according to at least one of Claims 1-4, **characterized in that** the optical scanning of the incremental graduation (13;

113; 213) is based on a three grating scanning principle, wherein the first impinged grating in the scanning beam path is the incremental graduation (13; 113; 213), the second impinged grating is the scanning grating (24; 124; 224) and the third impinged grating is the incremental detector (27; 127; 227), which is embodied as a structured detector.

6. Optical position measuring device according to at least one of Claims 1-4, **characterized in that** the optical scanning of a absolute encoding (12; 112; 212) is based on a shadow-casting principle and, in the process, there is a projection of the structures of the absolute encoding (12; 112; 212) into the detection plane on the absolute detector (26; 126; 226) without interposed optical imaging elements.

7. Optical position measuring device according to Claim 6, **characterized in that** the absolute encoding (12; 112; 212) is embodied as a pseudorandom code.

8. Optical position measuring device according to at least one of Claims 1-4, **characterized in that** the material measure (10; 110; 210) is embodied as a transmitted-light material measure, wherein the incremental graduation (13; 113; 213) and the absolute encoding (12; 112; 212) each have alternately arranged regions with different transmission properties.

9. Optical position measuring device according to Claim 1, **characterized in that** the scanning gap between the sides of the material measure (10; 110; 210) and of the scanning unit (20; 120; 220) facing one another is selected to be less than or equal to 50 μm.

10. Optical position measuring device according to Claim 1, **characterized in that** the scanning unit (20; 120; 220) comprises a single light source (21; 121; 221) for illuminating the incremental graduation (13; 113; 213) and the absolute encoding (12; 112; 212).

11. Optical position measuring device according to Claim 1, **characterized by** a regulation unit (30) that acts on the luminous intensity of the light source (21; 121; 221) as a function of the signal amplitudes of the periodic incremental signals in such a way that this always results in a predetermined signal amplitude of the periodic incremental signals.

12. Optical position measuring device according to Claim 1, **characterized in that** the incremental detector (27; 127; 227) and the absolute detector (26; 126; 226) are arranged together on one detector chip.

13. Optical position measuring device according to Claim 1, **characterized in that** a transparent filler medium with a refractive index n > 1 is arranged at least in part between the scanning grating (24; 124; 224) and the detector device (25; 125; 225).

14. Optical position measuring device according to Claim 1, **characterized in that** the scanning grating (24; 124; 224) is arranged in the interior of the filler medium.

**Revendications**

1. Dispositif optique de mesure de position destinée à effectuer une détermination absolue de position, comportant

- un étalon de mesure (10) qui s'étend le long d'une direction de mesure et au moins une division incrémentielle (13) et un codage absolu, et
- une unité de balayage (20) qui est disposée de manière mobile par rapport à l'étalon de mesure le long de la direction de mesure et comporte une source lumineuse (21), un réseau de balayage (24) destiné au balayage optique de la division incrémentielle et un dispositif détecteur (25), dans lequel
- le dispositif détecteur (25) comprend un détecteur incrémentiel destiné à générer des signaux incrémentiels à partir du balayage optique de la division incrémentielle ainsi qu'un détecteur absolu (26) destiné à générer des signaux absolus à partir du balayage optique du codage absolu et dans lequel le détecteur incrémentiel (27) et le détecteur absolu (26) sont disposés dans un plan de détection commun,

**caractérisé en ce que** le plan de détection présente une distance normale (v) par rapport au réseau de balayage et/ou **en ce que** la périodicité (d3) d'un motif de franges présents sur le détecteur incrémentiels (27 ; 127 ; 227) est sélectionné de manière à ce que, en cas de présence d'une salissure diffusante dans la zone de l'étalon de mesure (10 ; 110 ; 210) et/ou du réseau de balayage (24 ; 124 ; 224), les amplitudes des signaux incrémentiels diminuent de manière identique.

2. Dispositif optique de mesure de position selon la revendication 1, **caractérisé en ce que** la distance normale (v) entre le réseau de balayage (24 ; 124 ; 224) et le plan de détection est sélectionné soit conformément à :

$$v = u \cdot \frac{\left(\dfrac{1}{d_1} - \dfrac{1}{2 \cdot d_{ABS}}\right)}{\left(\dfrac{1}{d_3} + \dfrac{1}{2 \cdot d_{ABS}}\right)} \pm 10\%$$

ou conformément à :

$$v = u \cdot \frac{\left(\dfrac{1}{d_1} + \dfrac{1}{2 \cdot d_{ABS}}\right)}{\left(\dfrac{1}{d_3} - \dfrac{1}{2 \cdot d_{ABS}}\right)} \pm 10\%$$

où

$v$ := distance normale entre le réseau de balayage et le plan de détection,
$u$ := distance normale entre l'étalon de mesure et le réseau de balayage
$d_1$ := période de division de la division incrémentielle sur l'étalon de mesure
$d_3$ := périodicité du motif de franges sur le détecteur incrémentiel
$d_{ABS}$ := largeur de la structure la plus petite du codage absolu dans la direction de mesure.

3. Dispositif optique de mesure de position selon la revendication 1, **caractérisé en ce que** la périodicité ($d_3$) du motif de franges présent sur le détecteur incrémentiel (27 ; 127 ; 227) est sélectionné conformément à :

$$d_3 = 2 \cdot d_{ABS} \pm 10\%$$

où

$d_3$ := périodicité du motif de franges sur le détecteur incrémentiel
$d_{ABS}$ := largeur de la structure la plus petite du codage absolu dans la direction de mesure.

4. Dispositif optique de mesure de position selon la revendication 1, **caractérisé en ce que** la distance normale ($v$) entre le réseau de balayage (24 ; 124 ; 224) et le plan de détection est conformément à :

$$v = \frac{1}{2} u \cdot d_3 \cdot \left(\frac{1}{d_1} - \frac{1}{2 \cdot d_{ABS}}\right) \pm 10\%$$

où

$v$ := distance normale entre le réseau de balayage et le plan de détection,
$u$ := distance normale entre l'étalon de mesure et le réseau de balayage

$d_1$ := période de division de la division incrémentielle sur l'étalon de mesure
$d_3$ := périodicité du motif de franges sur le détecteur incrémentiel
$d_{ABS}$ := largeur de la structure la plus petite du codage absolu dans la direction de mesure.

5. Dispositif optique de mesure de position selon au moins l'une des revendications 1 - 4, **caractérisé en ce que** le balayage optique de la division incrémentielle (13 ; 113 ; 213) est basé sur un principe de balayage à trois réseaux, dans lequel le premier réseau exposé sur le chemin du faisceau de balayage est la division incrémentielle (13 ; 113 ; 213), le deuxième réseau exposé est le réseau de balayage (24 ; 124 ; 224) et le troisième réseau exposé est le détecteur incrémentiel (27 ; 127 ; 227) qui est réalisé sous la forme d'un détecteur structuré.

6. Dispositif optique de mesure de position selon au moins l'une des revendications 1 - 4, **caractérisé en ce que** le balayage optique du codage absolu (12 ; 112 ; 212) est basé sur un principe d'ombre portée et **en ce qu'**il se produit par conséquent une projection des structures du codage absolu (12 ; 112 ; 212) sans interposition d'éléments optiques de formation d'image dans le plan de détection sur le détecteur absolu (26 ; 126 ; 226).

7. Dispositif optique de mesure de position selon la revendication 6, **caractérisé en ce que** le codage absolu (12 ; 112 ; 212) est réalisé sous la forme d'un code pseudoaléatoire.

8. Dispositif optique de mesure de position selon au moins l'une des revendications 1 - 4, **caractérisé en ce que** l'étalon de mesure (10 ; 110 ; 210) est réalisé sous la forme d'un étalon de mesure optiquement transmissif, dans lequel la division incrémentielle (13 ; 113 ; 213) et le codage absolu (12 ; 112 ; 212) présentent respectivement des zones ayant des propriétés de transmission différentes disposées de manière alternée.

9. Dispositif optique de mesure de position selon la revendication 1, **caractérisé en ce que** l'interstice de balayage entre les faces mutuellement opposées de l'étalon de mesure (10 ; 110 ; 210) et de l'unité de balayage (20 ; 120 ; 220) est sélectionné à une valeur inférieure à 50 $\mu$m.

10. Dispositif optique de mesure de position selon la revendication 1, **caractérisé en ce que** l'unité de balayage (20 ; 120 ; 220) comprend une source lumineuse unique (21 ; 121 ; 221) destinée à éclairer la division incrémentielle (13 ; 113 ; 213) et le codage absolu (12 ; 112 ; 212).

**11.** Dispositif optique de mesure de position selon la revendication 1, **caractérisé par** une unité de régulation (30) qui agit sur les intensités lumineuses de la source lumineuse (21 ; 121 ; 221) en fonction des amplitudes de signal des signaux incrémentiels périodiques de telle manière qu'il en résulte en continu une amplitude de signal prédéterminée des signaux incrémentiels périodiques.

**12.** Dispositif optique de mesure de position selon la revendication 1, **caractérisé en ce que** le détecteur incrémentiel (27 ; 127 ; 227) et le détecteur absolu (26 ; 126 ; 226) sont disposés en commun sur une puce de détection.

**13.** Dispositif optique de mesure de position selon la revendication 1, **caractérisé en ce qu'**un milieu de remplissage transparent ayant un indice de réfraction $n > 1$ est au moins partiellement disposé entre le réseau de balayage (24 ; 124 ; 224) et le dispositif détecteur (25 ; 125 ; 225).

**14.** Dispositif optique de mesure de position selon la revendication 1, **caractérisé en ce que** le réseau de balayage (24 ; 124 ; 224) est disposé au sein du milieu de remplissage.

Fig. 1

Fig. 2a

Fig. 2b

Fig. 2c

Fig. 3

Fig. 4a

Fig. 4b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5235181 A

- EP 1043571 A1

**In der Beschreibung aufgeführte Nicht-Patentliteratur**

- **R. PETTIGREW.** Analysis of Grating Imaging and its Application to Displacement Metrology. *SPIE Vol. 36, 1st European Congress on Optics applied to Metrology,* 1977, vol. 36, 325-33